# EUROPÄISCHE PATENTANMELDUNG

(11) **EP 1 452 295 A2**
(43) Veröffentlichungstag der Anmeldung: **01.09.2004**
(21) Anmeldenummer: 04003057.9
(22) Anmeldetag: 11.02.2004
(51) Int. Cl.: B29C 47/68

(54) **Extruder zur Entwässerung**

(30) Priorität: 27.02.2003 DE 10308387
(71) Anmelder: Berstorff GmbH, 30625 Hannover (DE)
(72) Erfinder: Chszaniecki, Siegfried, 30171 Hannover (DE)
(74) Vertreter: Zollner, Richard

(57) **Zusammenfassung**

Die Erfindung betrifft einen Extruder zur Entwässerung, insbesondere von Feucht-Pulver, umfassend ein Extrudergehäuse, in dem eine gleichsinnig angetriebene Doppelschnecke aufgenommen ist, und wobei über die Länge des Extruders (4) zumindest eine Entgasungsöffnung vorgesehen ist.

Um einen besonders kurzbauenden Extruder herstellen zu können, wird vorgeschlagen, zumindest zwei Entgasungsöffnungen seitlich am Extrudergehäuse (4) vorzusehen, deren Position sich in gleichem axialen Abstand befindet und die zueinander gegenüber dem Umfang des Extrudergehäuses winkelversetzt sind.

## Beschreibung

Die Erfindung betrifft einen Extruder zur Entwässerung, insbesondere von Feucht-Pulver, gemäß dem Oberbegriff des Anspruchs 1.

Extruder zur Entwässerung, beispielsweise von Kautschukmaterialen sind hinlänglich bekannt. Nur beispielhaft wird auf die DE 44 02 394 verwiesen, in der ein Verfahren zusammen mit einer Vorrichtung zur Entwässerung von wasserfeuchtem Pfropfkautschuk beschrieben' ist. Bei diesem Verfahren wird eine dreigängige Zweischneckenmaschine verwendet, deren Gehäuse verschiedene Gehäuseabschnitte umfasst. Ein Gehäuseteil besitzt eine oben liegende Öffnung, um eingeschlossene Luft zu entfernen. Ein unbeheizter Abschnitt ist mit einer Einschneckenbestückung für die Dosiervorrichtung versehen. Zwei Abschnitte umfassen oben liegende Entwässerungsöffnungen und weitere Entgasungsabschnitte umfassen eine Aufweitung des Schneckengehäuses für die atmosphärische Entgasung.

Auch die Schnecke umfasst verschiedene Schneckenabschnitte mit Einzugs- und Förderbereichen, Abquetschzonen, einer Knetzone sowie Entgasungs- und Austragbereiche.

Nachteilig bei den bisher bekannten Extrudern zur Entwässerung von bestimmten Materialien sind zumeist deren Baulänge, da die Schnecken und Gehäuse eine Vielzahl von verschiedene Abschnitten besitzen.

Ziel der vorliegenden Erfindung ist es daher, einen Extruder zur Entwässerung anzugeben, bei dem die Baulänge verkürzt ist.

Diese Aufgabe wird durch die im Anspruch 1 angegebenen Merkmale gelöst.

Demgemäß sind bei einem gattungsgemäßen Extruder zumindest zwei Entgasungsöffnungen seitlich am Extrudergehäuse vorgesehen, deren Positionen sich im Bereich einer Entgasungszone, insbesondere im gleichen axialen Abstand, befinden und die zueinander gegenüber dem Umfang des Extrudergehäuses winkelversetzt sind. Mit der vorliegenden Erfindung wird die Entgasung damit vorzugsweise im Bereich einer axialen Position über zumindest zwei oder mehrere Entgasungsöffnungen vorgenommen.

Je nach Ausgangsmaterial und Flüssigkeitsgehalt kann die Entgasung dabei in ausreichendem Maße vorgenommen werden, so dass über die Länge des Extruders verteilt mehrere Entgasungszonen vermieden werden können. Sollte aufgrund des Ausgangsmaterials bzw. des Feuchtegehalts noch eine weitere Entgasung notwendig sein, so können, axial versetzt, natürlich auch weitere Entgasungsöffnungen - evtl. wiederum mehrere pro axialer Position - angeordnet werden. In jedem Fall bieten die zumindest zwei oder mehreren Entgasungsmöglichkeiten an einer axialen Position eine bessere Entgasung als eine einzige Entgasungsöffnung an der selben axialen Position des Extruders.

Evtl. ist auch eine gewissen axiale Versetzung von zwei winkelversetzt zueinander angeordneten Entgasungsöffnungen im Bereich einer Entgasungsöffnung möglich.

Bei einer vorzugsweisen Ausführungsform der Erfindung sind die zwei Entgasungsöffnungen im wesentlichen diametral gegenüberliegend am Extrudergehäuse angeordnet.

Damit das im Extruder zu entgasende Material nicht über die Entgasungsöffnungen im Extrudergehäuse austritt, besitzen diese Entgasungsöffnungen vorzugsweise Rückhaltevorrichtungen für das zu extrudierende Material. Diese Rückhaltevorrichtungen weisen Flüssigkeits-/Gasabführungen auf, über die dem Extrudat zu entziehende Feuchtigkeit abführbar ist. Eine Möglichkeit einer Rückhaltevorrichtung stellt sich in der Verwendung einer kurzen Doppelschnecke dar, deren Schneckenachse im wesentlichen senkrecht zur axialen Erstreckung des Extruders angeordnet sind und die bei deren Betrieb das Material in den Extruder zurückdrängen und dadurch zurückhalten.

Die Abführung kann durch den Einsatz einer Absaugpumpe unterstützt und gefördert werden. Vorzugsweise ist dabei zwischen Absaugpumpe und Rückhaltevorrichtung ein Kondensator vorgesehen.

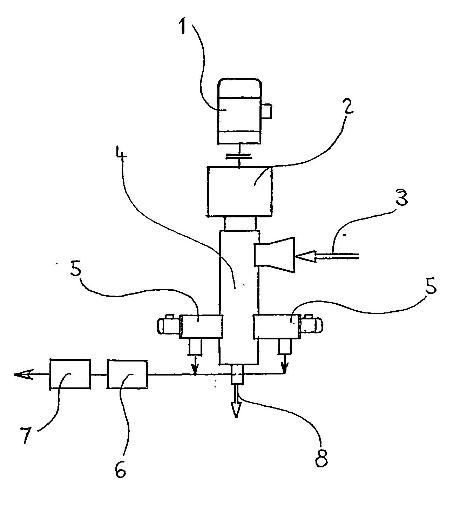

Die vorliegende Erfindung wird nachfolgend anhand eines Ausführungsbeispiels und mit Bezug auf die beigefügte Zeichnung näher erläutert.

Die Zeichnung zeigt einen schematischen Aufbau einer Ausführungsform eines erfindungsgemäßen Extruders zur Entwässerung.

Der Extruder selbst - in der vorliegenden Figur mit Bezugszeichen 4 bezeichnet - umfasst ein Extrudergehäuse, insbesondere einen Extruderzylinder, in dem eine Doppelschnecke aufgenommen ist. Über eine Einlassöffnung wird das zu entwässernde Material zugeführt (Bezugszeichen 3).

Der Extruder wird über eine Kombination aus Antrieb 1 und Getriebe angetrieben. Dabei werden die beiden Schnecken gleichsinnig zueinander gedreht. Noch vor der Austragsöffnung 8 sind im Extruderzylinder seitlich zwei diametral gegenüberliegende Entgasungsöffnungen vorgesehen, an denen jeweils eine Rückhaltevorrichtung 5 aufgesetzt ist.

Jede Rückhaltevorrichtung umfasst ein eigenes Doppelschneckensystem, deren gleichsinniger Betrieb die Rückhaltung des Extrudats im Extruder 4 sicher stellt. Die abzuführende Feuchtigkeit (Flüssigkeit oder Gas) kann jedoch über die Rückhaltevorrichtung und die schematisch dargestellten Flüssigkeits-/Gasabführungen ohne weiteres erfolgen. Die Flüssigkeits-/Gasabführungen (Leitungen) der Rückhaltevorrichtungen sind vorliegend mit einem Kondensator 6 verbunden, in dem gasförmige Flüssigkeit kondensiert und über eine nachgeschaltete Absaugpumpe 7 abgeführt wird.

Mit dieser Konstruktion ist die Herstellung eines recht kurz bauenden Extruders zur Entwässerung möglich, da die Entgasungsöffnungen nicht in axialer Richtung des Extruders hintereinander angeordnet sind, sondern axial gesehen an einer Position.

Dadurch ist ein größere Flüssigkeits- oder Gasaustrag möglich. Überdies lässt die in dem kurzen Extruder verminderte Verweilzeit eine höhere Energieeinleitung zu, ohne dass es zu Produktschädigungen kommt. Dadurch ist die Entwässerungsleistung noch weiter verbessert.

### Bezugszeichenliste

- 1: Antrieb
- 2: Getriebe
- 3: Feucht-Pulver-Zuführung
- 4: Extruder
- 5: Rückhaltevorrichtung
- 6: Kondensator
- 7: Absaugpumpe
- 8: Produktaustrag

## Patentansprüche

1. Extruder zur Entwässerung, insbesondere von Feucht-Pulver, umfassend ein Extrudergehäuse, in dem eine gleichsinnig angetriebene Doppelschnecke aufgenommen ist, wobei über die Länge des Extruders zumindest eine Entgasungszone vorgesehen ist, **dadurch gekennzeichnet, dass** im Bereich der einen Entgasungszone zumindest zwei Entgasungsöffnungen seitlich am Extrudergehäuse vorgesehen sind, deren Positionen sich im Bereich der einen Entgasungszone befinden und die zueinander gegenüber dem Umfang des Extrudergehäuses winkelversetzt sind.

2. Extruder nach Anspruch 1, **dadurch gekennzeichnet, dass** die zumindest zwei Entgasungsöffnungen im wesentlichen im gleichem axialen Abstand vorgesehen sind.

3. Extruder nach Anspruch 1 oder 2, **dadurch gekennzeichnet**,- dass zwei Entgasungsöffnungen im wesentlichen diametral gegenüberliegen am Extrudergehäuse angeordnet sind.

4. Extruder nach Anspruch 3, **dadurch gekennzeichnet, dass** zumindest zwei gegenüberliegende, seitliche Entgasungsöffnungen axial gegeneinander versetzt sind.

5. Extruder nach einem der vorhergehenden Ansprüche, **dadurch gekennzeichnet, dass** an den Entgasungsöffnungen Rückhaltevorrichtungen für das zu extrudierende Material mit Flüssigkeits-/Gasabführungen vorgesehen sind.

6. Extruder nach Anspruch 5, **dadurch gekennzeichnet, dass** die Rückhaltevorrichtungen ebenfalls eine Doppelschnecke beinhalten, die sich gleich oder gegensinnig zueinander drehen.

7. Extruder nach einem der vorhergehenden Ansprüche, **dadurch gekennzeichnet, dass** über die axiale Länge des Extruders nur an einer axialen Position die zumindest zwei Entgasungsöffnungen vorgesehen sind.

8. Extruder nach einem der vorhergehenden Ansprüche, **dadurch gekennzeichnet, dass** die Flüssigkeits-/Gasabführungen mit einer Absaugpumpe verbunden sind.

9. Extruder nach Anspruch 8, **dadurch gekennzeichnet, dass** zwischen den Rückhaltevorrichtungen und der Absaugpumpe zumindest ein Kondensator vorgesehen ist.

10. Extruder nach einem der vorhergehenden Ansprüche, **dadurch gekennzeichnet, dass** die seitlich angeordneten Entgasungsöffnungen axial vor einem Austrag aus dem Extruder angeordnet sind.
